# FASCICULE DE BREVET EUROPEEN

(11) **EP 1 261 652 B1**
(45) Date de publication et mention de la délivrance du brevet: **21.09.2005**
(21) Numéro de dépôt: 00993717.8
(22) Date de dépôt: 28.12.2000
(51) Int. Cl.: C08F 212/14, C08F 228/02, E21B 37/06, C09K 7/02

(54) **INHIBITEURS DE DEPOTS INORGANIQUES, NOTAMMENT DANS LES PUITS PETROLIERS, NOTAMMENT EN CONDITIONS HAUTE PRESSION/HAUTE TEMPERATURE**
INHIBITOREN VON ANORGANISCHEN ABLAGERUNGEN, INSBESONDERE BEI ERDÖLBOHRUNGEN, INSBESONDERE UNTER HOHEM DRUCK UND HOHER TEMPERATUR
INORGANIC DEPOSIT INHIBITORS, IN PARTICULAR IN OIL WELLS, PARTICULARLY IN HIGH PRESSURE/HIGH TEMPERATURE CONDITIONS

(30) Priorité: 29.12.1999 FR 9916654
(43) Date de publication de la demande: 04.12.2002
(73) Titulaire: CECA S.A., 92800 Puteaux (Hauts de Seine) (FR)
(72) Inventeur: HURTEVENT, Christian, F-64110 Jurançon (FR); PIRRI, Rosangela, F-64121 Montardon (FR)
(74) Mandataire: Cabinet Hirsch
(86) Numéro de dépôt international: PCT/FR2000/003712
(87) Numéro de publication internationale: WO 2001/049756

(56) Documents cités:
- EP-A- 0 184 894
- EP-A- 0 564 248
- EP-A- 0 643 081
- EP-A- 0 792 998

## Description

La présente invention concerne l'inhibition de dépôts inorganiques et tout particulièrement de carbonate de calcium et de sulfate de baryum dans les puits pétroliers. Elle concerne également certains copolymères particulièrement adaptés à cette application, notamment en conditions haute pression/haute température (HP/HT).

Le dépôt de sels inorganiques, globalement qualifiés de tartre est un problème fréquent dans les opérations visant à la récupération du pétrole. Une des raisons de la précipitation de tels sels réside dans le mélange de fluides incompatibles, contenant des ions distincts, susceptibles de se combiner en précipitant en formant ce tartre. Ainsi dans les exploitations off-shore, on injecte de grandes quantités d'eau de mer contenant de fortes concentrations en ions sulfate dans le réservoir contenant des ions baryum, calcium et éventuellement strontium. Le contact de ces deux fluides entraîne la précipitation des sulfates de baryum, calcium et strontium tant dans le puits producteur que dans les installations de surface et autres canalisations. Le carbonate de calcium se forme par modification des équilibres thermodynamiques liés aux variations de pression et de température.

Les observations qui précèdent ont conduit au développement d'additifs anti-dépôt ou anti-tartre. Ainsi dans les brevets US-A-4710303 et 5092404, on a proposé d'utiliser des polymères de vinylsulfonate de sodium pour l'inhibition de la précipitation de sulfate de baryum dans des eaux à bas pH.

Dans le brevet US-A-3879288 on a proposé d'utiliser un copolymère d'un composé vinylique, par exemple l'acide (meth)acrylique et d'un vinylsulfonate ou allylsulfonate pour le contrôle de sels et, en particulier, carbonates et sulfates de calcium et autres métaux alcalino-terreux.

Dans le brevet US-A-4898677 on propose d'inhiber la formation de sulfate de baryum en ajoutant un copolymère d'acide acrylique et de vinylsulfonate de métal alcalin, dans le but d'augmenter la solubilité ou la dispersibilité du sulfate de baryum dans le milieu et de modifier le structure du cristal de sulfate de baryum.

Dans le brevet EP-B-297049, on propose d'empêcher le dépôt de sulfate de baryum en utilisant une quantité appropriée d'un polymère soluble dans l'eau contenant des motifs dérivés notamment de l'acide vinyl-sulfonique (10 à 100%), des motifs dérivés notamment de l'acide acrylique (0 à 90%) et des motifs dérivés notamment de composés insaturés à groupements amide, acide, ou esters sulfoniques, phosphoriques, d'alcènes, de styrène (0 à 25%), ce brevet n'illustrant que les copolymères acide vinylsulfonique/acide acrylique.

La demande de brevet EP-A-792998 propose d'inhiber en particulier la formation de sulfate de baryum en introduisant dans le fluide aqueux un polymère hydrosoluble comprenant des motifs dérivés d'un acide sulfonique insaturé et de ses sels solubles (5 à 35%), d'un acide monocarboxylique insaturé (0 à 85%), d'un acide dicarboxylique insaturé (0 à 80%) et d'un monomère insaturé non-ionisable (0 à 20%), le fluide aqueux contenant des ions calcium, baryum, strontium et sulfate.

Selon ce document, ce traitement s'applique particulièrement à ce qu'il est convenu d'appeler le procédé « squeeze ». Ce procédé consiste généralement à injecter de l'eau de mer dans le puits, puis à injecter le fluide contenant l'inhibiteur dans le réservoir et à envoyer de nouveau un flux d'eau de mer, dans le but de répartir l'inhibiteur dans le réservoir aux fins d'adsorption sur la roche.

Il est intéressant de noter que, dans les références citées ci-dessus, et bien que le carbonate de calcium soit cité parmi les sels formant tartre, on s'est, de fait, essentiellement attaché à empêcher la précipitation de sulfate de baryum et dans des conditions douces de pression et de température. Or, il apparaît que certains additifs anti-tartre, tels que les terpolymères à base de monomère sulfoné/acide acrylique/acide maléique, ne donnent de bons résultats qu'à température modérée (inférieure à 150 ° C). Aux alentours de 200 ° C, les homopolymères de vinylsulfonate de sodium présentent une stabilité thermique satisfaisante mais une adsorption sur la roche insuffisante.

La demande de brevet européen n° EP-A-459 661 concerne un procédé pour contrôler la formation de dépôts de silice ou de silicate dans un système aqueux, dans lequel on utilise (a) certains copolymères ou terpolymères hydrosolubles à bas poids moléculaire de l'acide (méth)acrylique ou maléique, (b) un ion magnésium, (c) un mélange des copolymères ou terpolymères précités avec un ion aluminium ou magnésium, ou (d) de l'acide poly(méth)acrylique ou polymaléique à bas poids moléculaire avec un ion aluminium ou magnésium.

Le brevet américain n° US 4 566 972 se rapporte à un procédé pour empêcher les dépôts de tartre dans un système aqueux, par introdution dans l'eau d'un amino-carboxylate particulier et d'un copolymère hydrosoluble pouvant posséder des unités sulfonées.

La demande de brevet européen n° EP-A-184 894 a trait à un procédé pour empêcher la corrosion et la formation de dépôts de tartre et d'oxyde de fer dans des systèmes aqueux, dans lequel on introduit dans les systèmes aqueux un polymère hydrosoluble préparé à partir d'un acide carboxylique insaturé, d'un acide sulfonique insaturé et d'un poly(oxyde d'alkylène) insaturé.

L'invention propose en premier lieu des inhibiteurs de dépôt inorganiques pouvant être mis en oeuvre en conditions haute pression/haute température.

L'invention propose également des inhibiteurs pouvant être mis en oeuvre par le procédé « squeeze ».

L'invention propose plus particulièrement des inhibiteurs ayant une bonne adsorption sur la roche permettant une désorption lente, au fur et à mesure de la production d'eau.

L'invention propose encore des inhibiteurs particulièrement efficaces contre le dépôt de carbonate de calcium et/ou de sulfate de baryum.

D'autre objets et avantages des inhibiteurs selon l'invention apparaîtront à la lecture de ce qui suit.

L'invention concerne donc en premier lieu des inhibiteurs de dépôt inorganiques, caractérisés en ce qu'ils comprennent un copolymère hydrosoluble consistant en (en moles % des monomères polymérisés) :
a) 5 à 95 % d'acide styrènesulfonique ou de l'un de ses sels ;
b) 5 à 95 % d'acide vinylsulfonique ou de l'un de ses sels ;
c) 0 à 20% d'un ou plusieurs monomères insaturés non ionisables.

L'invention concerne plus particulièrement des inhibiteurs caractérisés en ce qu'ils comprennent un copolymère hydrosoluble consistant en (en moles % des monomères polymérisés):
a) 10 à 45% d'acide styrènesulfonique ou de l'un de ses sels,
b) 55 à 90% d'acide vinylsulfonique ou de l'un de ses sels.

L'invention concerne également les copolymères hydrosolubles tels que mentionnés aux paragraphes précédents.

Comme indiqué précédemment, on peut remplacer totalement ou partiellement les acides sulfoniques et polycarboxyliques précités par leurs sels, notamment les sels de métaux alcalins tels que sodium ou potassium ou les sels d'ammonium ou d'amines quaternisées.

Parmi les acides styrènesulfoniques (et leurs sels), on utilise de préférence l'acide 4-styrènesulfonique. Lorsque le copolymère comprend des motifs dérivés d'acides polycarboxyliques insaturés (ou leurs sels), on utilise de préférence l'acide maléique ou son anhydride, les acides fumarique, itaconique, citraconique ou l'anhydride cis 1, 2, 3, 6 tétrahydrophtalique ou les sels hydrosolubles de sodium, potassium ou ammonium desdits acides. De tels monomères, lorsqu'ils sont présents, représentent de préférence jusqu'à 30% en moles% des monomères polymérisés.

Les monomères insaturés non-ionisables sont choisis parmi le groupe constitué par les (meth)acrylamides non substitués ou (C1-C8) alkyl ou hydroxy (C1 - C8) alkyl substitués; les esters (méth)acryliques non substitués ou (C1 - C8) alkyl- ou hydroxy (C1-C8) alkyl- substitués; l'acétate de vinyle, le styrène, le vinyltoluène. De tels monomères, lorsqu'ils sont présents, représentent jusqu'à 10% en moles% des monomères polymérisés.

Lorsque le copolymère ne comprend que les motifs dérivés d'acide vinyl-sufonique ou de ses sels et d'acide styrènesuflonique et en particulier d'acide 4-styrène sulfonique ou de ses sels, le pourcentage molaire d'acide vinylsulfonique ou de ses sels est compris de préférence entre 70 et 90% et plus encore entre 80 et 90%.

L'invention concerne spécialement de tels copolymères hydrosolubles.

Les copolymères hydrosolubles conformes à l'invention présentent une masse molaire (en nombre) généralement comprise entre 3 000 et 50 000, de préférence entre 5 000 et 30 000. De préférence leur indice de dispersité Mw / Mn est inférieur ou égal à 3.

La masse molaire des copolymères est mesurée par chromatographie d'exclusion stérique (SEC). La chaîne chromatographique utilisée comporte une pompe WATERS 590 (WATERS, Milford, USA), un injecteur WATERS 717plus et un détecteur réfractométrique WATERS R410. Le jeu de colonnes utilisé est constitué de 2 colonnes (POLYMER LABORATORIES PL aquagel-OH ; 8µm ; 300 x 7.5 mm) remplies de billes de polymère macroporeux (surface fortement hydrophile, polyhydroxylée), rigides. Deux porosités sont utilisées: 40 (domaine de résolution : 10000 - 200000 eq. PEO/PEG) et 30 (domaine de résolution : 100 - 30000 eq. PEO/PEG). L'éluant est composé de 80% d'eau (purifiée avec Milli-Q ZFMQ 230 04 de MILLIPORE) contenant du nitrate de sodium à une concentration de 0.3M, de l'hydrogénophosphate de sodium à une concentration de 0.01 M et de 20% de méthanol ; la solution a ainsi un pH de 9. Le débit d'introduction du solvant est de 1 cm³.min⁻¹. Les solutions de copolymères à analyser sont préparées à une concentration de 1 g.l⁻¹ et 100µl de solution sont injectés. La courbe d'étalonnage est construite à partir d'un jeu de 8 étalons de polysaccharides PULLULANS de Mw comprise entre 5900 et 788000, à distribution étroite (indice de dispersité compris entre 1.06 et 1.23).

La distribution des masses molaires est calculée en utilisant les résultats de la détection réfractométrique et de l'étalonnage obtenu à partir des étalons de PULLULAN. Finalement, différentes grandeurs moyennes caractéristiques de la distribution sont calculées (Mn : masse moyenne en nombre ; Mw : masse moyenne en poids ; i : indice de dispersité = Mw/Mn).

Les copolymères faisant l'objet de l'invention peuvent être obtenus en polymérisant les monomères indiqués précédemment selon des méthodes conventionnelles en présence d'initiateurs de radicaux libres.

Selon la solubilité des monomères utilisés, la polymérisation est effectuée en solution aqueuse ou partiellement aqueuse par exemple une solution eau/alcanol, alcanol, tel que l'éthanol, l'isopropanol, l'éthylène glycol, le diéthylène glycol.

Le milieu réactionnel est avantageusement à pH acide, de préférence inférieur à 6.

Parmi les initiateurs de radicaux libres, on peut citer les peroxydes, tels que le peroxydes de benzoyle ou de t-butyl, des composés azo tels que l'azo-bis-isobutyronitrile, le 2-2'-azo-bis(2-amidino-propane)dihydrochlorure (AIBA) et, de préférence, des sels de peracides, tels que les persulfates de potassium ou d'ammonium.

La polymérisation est généralement effectuée à une température comprise entre 40 et 120°C, de préférence entre 45 et 100°C et la durée de polymérisation peut être de quelques heures, par exemple 2 à 10.

Les copolymères sont obtenus sous forme de solution et celle-ci peut être soumise à une évaporation partielle ou totale, généralement sous pression réduite. Les copolymères soumis à une évaporation partielle ou totale seront redilués pour leur utilisation.

Les copolymères en solution peuvent être utilisés tels quels en tant qu'inhibiteurs au sens de l'invention, ou purifiés selon des méthodes traditionnelles telles que:
- évaporation du solvant de la réaction, dissolution dans l'eau, lavage avec un solvant organique non miscible à l'eau (éther) et évaporation de la solution aqueuse ou
- évaporation du solvant de la réaction, dissolution du résidu dans le méthanol et précipitation par addition d'éther.

Les copolymères conformes à l'invention, dans lesquels tout ou partie des hydrogènes acides sont remplacés par des cations dérivés d'un sel approprié formant une base peuvent être également préparés en mélangeant une solution aqueuse, hydroalcoolique ou alcoolique du copolymère acide avec une solution aqueuse, hydroalcoolique ou alcoolique contenant une quantité de la base requise appropriée au degré de substitution désiré.

Les copolymères faisant l'objet de la présente invention constituent des inhibiteurs de dépôt inorganiques, notamment de carbonate de calcium et de sulfate de baryum particulièrement efficaces lors de leur utilisation en « squeeze » sur des puits pétroliers fonctionnant en conditions haute pression, c'est-à-dire de l'ordre de 20 à 150 MPa et haute température, c'est-à-dire de l'ordre de 130 à 230° C. Ces copolymères présentent en effet une tenue thermique suffisante, une bonne efficacité en inhibition de formation de sels (CaCO₃ et BaSO₄), une insensibilité aux fortes teneurs en Ca⁺⁺ des eaux du réservoir et une adsorption sur la roche suffisante pour l'utilisation en « squeeze ». Cet ensemble de propriétés ne se retrouve pas dans les inhibiteurs connus à ce jour, qu'il s'agisse de terpolymères à base de monomère sulfoné/acide acrylique/acide maléique ou qu'il s'agisse d'homopolymères de vinylsulfonate de sodium.

Sans être lié par une quelconque explication, on peut penser que ces propriétés sont dues à la présence de groupements styrènesulfonate dans les copolymères : ces groupements apporteraient une insensibilité au calcium des copolymères de forte masse moléculaire par comparaison avec les homopolymères de même masse, et donc une plus grande adsorption sur roche.

Lors des opérations de transport et de stockage, les inhibiteurs conformes à l'invention se présentent soit en poudre, soit en solution dont la concentration peut être de l'ordre de 15 à 30 % en poids.

Lors de l'utilisation dans les puits pétroliers, les solutions destinées à l'injection en continu dans les puits ont une concentration de l'ordre de 1 à 100 ppm, alors que les solutions utilisées en « squeeze » sont injectées pour leur placement sur la roche à une concentration de l'ordre de 10% en poids, toutes ces valeurs de concentration n'étant données qu'à titre purement indicatif.

Bien que l'inhibiteur conforme à l'invention puisse être utilisé seul, on peut sans sortir du cadre de cette invention lui associer des additifs connus dans le domaine d'application, tels que inhibiteurs de corrosion, agents dispersants, agents de précipitation, capteurs d'oxygène, agents séquestrants, agents anti-mousse, biocides, désémulsionants, anti-asphaltènes.

Les propriétés applicatives des inhibiteurs conformes à l'invention sont évaluées comme suit:

### a) Inhibition de BaSO₄ et de CaCO₃

Ce test permet d'évaluer l'efficacité des inhibiteurs de dépôts utilisés dans les traitements préventifs. Réalisé sur une boucle anti-dépôt, il consiste à mesurer le temps de colmatage d'un capillaire lors de l'injection d'un mélange de deux eaux incompatibles: une eau contient des bicarbonates (HCO₃⁻), l'autre le calcium (Ca⁺⁺ Mg⁺⁺) pour une étude sur les dépôts carbonatés (calcite...); une eau contient les sulfates (SO₄⁻⁻), l'autre le baryum (Ba⁺⁺, Sr⁺⁺) pour une étude sur les dépôts sulfatés. Chacune des eaux contient une quantité d'inhibiteur pouvant généralement varier entre 10 et 100 ppm. Une mesure de pression différentielle permet de suivre l'évolution du colmatage du capillaire. Les expérimentations comprennent un essai témoin sans inhibiteur et des tests en présence d'inhibiteurs.

### b) Compatibilité au calcium

On détermine à partir de quelle concentration en Ca⁺⁺ un inhibiteur, à une concentration donnée, va précipiter. On l'observera en suivant l'évolution de la turbidité de la solution de contact à l'aide d'un turbidimètre.

Le principe de l'essai est d'observer l'apparition d'un trouble ou d'un dépôt par la diminution de la transmittance des solutions d'eau distillée de chaque inhibiteur (à 0,1, 1,5 et 10% en poids à pH 5, 6 et 7 lors de l'ajout de quantités connues de calcium. Les essais sont effectués à température ambiante.

### c) Essais d'adsorption sur roche (essai sur carotte)

Ce test est utilisé pour le dimensionnement des traitements préventifs par squeeze. Réalisé sur un échantillon de carotte représentatif du réservoir dans lequel le traitement sera mis en place, il a pour objectif de vérifier que l'adsorption (ou la précipitation) de l'inhibiteur sur le milieu poreux est correcte et donc que le traitement aura une durée de vie acceptable et de contrôler que l'adsorption (ou la précipitation) d'une quantité importante d'inhibiteur n'aura pas d'incidence sur la productivité du puits (diminution de la perméabilité). Le montage expérimental utilisé est une cellule « HASSLER » dans laquelle l'échantillon de carotte est caractérisé (porosité...) et conditionné aux conditions du réservoir (pression, température, présence d'huile). Les différentes séquences d'un traitement par squeeze (à l'exception d'overflush) sont reproduites: préflush, flush, fermeture, balayage à l'eau de formation. Un collecteur de fraction à la sortie du système permet d'échantillonner des fractions pendant les phases d'injection et de balayage pour suivre l'évolution des concentrations en inhibiteur (adsorption/précipitation, désorption). A l'issue de ce test les données expérimentales sont utilisées pour calculer une loi d'adsorption (ou de précipitation) de l'inhibiteur qui servira ensuite au dimensionnement du traitement sur site.

Les exemples qui suivent illustrent l'invention.

### Exemples 1 à 5 et comparatifs 1a à 1f

### 1. Synthèse des copolymères

### Exemple pour addition continue (essai 3)

Les quantités de réactifs et additifs et les résultats sont rassemblés dans le tableau I où VS et SStNa désignent respectivement le vinylsulfonate de sodium et le 4-styrène sulfonate de sodium.

On dissout dans l'eau le 4-styrènesulfonate de sodium et à environ 10% en poids de cette solution on ajoute la solution de vinyl sulfonate de sodium. On vérifie le pH et ajoute éventuellement sous agitation de l'acide sulfurique (à 96% en poids) pour obtenir un pH de 3,8.

On introduit cette solution de monomères dans un réacteur inox muni d'un double agitateur. On dégaze à l'azote 3 fois par une succession de cycles vide/azote.

On chauffe l'ensemble sous agitation (250 t/mn). On introduit simultanément le persulfate de potassium en solution aqueuse en une fois ou en continu au débit de 25 cm³/h (voir tableau) et le reste de la solution de SStNa en continu à la même vitesse.

On maintient la température pendant 1 à 2 heures, ou effectue la polymérisation à 2 températures différentes (voir tableau 1).

On laisse redescendre la température à 40°C et on retire la solution.

On obtient une solution de polymère à la concentration de 20% en poids.

### Exemple pour batch (essais 1,2,4, 5, 1 a et 2a)

On disperse et/ou dissout le SStNa dans la solution de VS. On règle le pH à 3,8. On chauffe à la température de réaction. On introduit l'amorceur et on laisse 2 à 10 heures.

### 2.- Propriétés applicatives

Les inhibiteurs sont mis en oeuvre sous forme de solutions aqueuses à différentes concentrations selon le test et sont soumis aux tests décrits plus haut.

Les résultats sont rassemblés dans le tableau II.

Dans la colonne « Additif », les symboles ont les significations suivantes:
- VS = vinylsulfonate de sodium (monomère)
- HVS = homopolymère de vinylsufonate de sodium
- VS/VSS = copolymère vinylsulfonate de sodium/ styrène sulfonate de sodium, avec indication des proportions molaires de monomères polymérisés.
- TROS810 = HVS commercialisé par la Société TROS
- EC6151A = HVS commercialisé par la Société Nalco/Exxon

Dans la colonne « stabilité thermique », le symbole OK signifie une stabilité vérifiée au bout de 3 semaines à 200°C.

Dans la colonne « stabilité au calcium », le terme « comptabilité » signifie une absence de trouble ou dépôt, pour une quantité de calcium allant jusqu'à 40 g/l et un pH du milieu allant de 4 à 7.

Dans la colonne « adsorption », on indique la quantité d'inhibiteur adsorbé (en mg) par gramme de roche : la roche utilisée présente les caractéristiques suivantes :
- carotte de 209 g avec un volume de pores de 16.5 cm³
- grès Sandstone.

On injecte une solution aqueuse à 10% d'inhibiteur en maintenant la roche à une température de 200°C (utilisation en « squeeze »).

Dans la colonne « désorption », on indique la durée de vie du traitement (en jours) au bout de laquelle la concentration en inhibiteur dans l'eau de production est respectivement de 1, 5, 10 ou 50 ppm. Les valeurs sont obtenues par simulation à l'aide d'un logiciel « Squeeze 5 », mis au point par l'Université Heriott-Watt d'Edimbourg. Cette simulation a été faite en retenant les conditions opératoires suivantes :
- épaisseur du gisement : 30m
- injection de 220 m³ de solution à 10% d'inhibiteur
- production d'eau : 500 m³/jr
et en intégrant les valeurs d'adsorption du tableau II

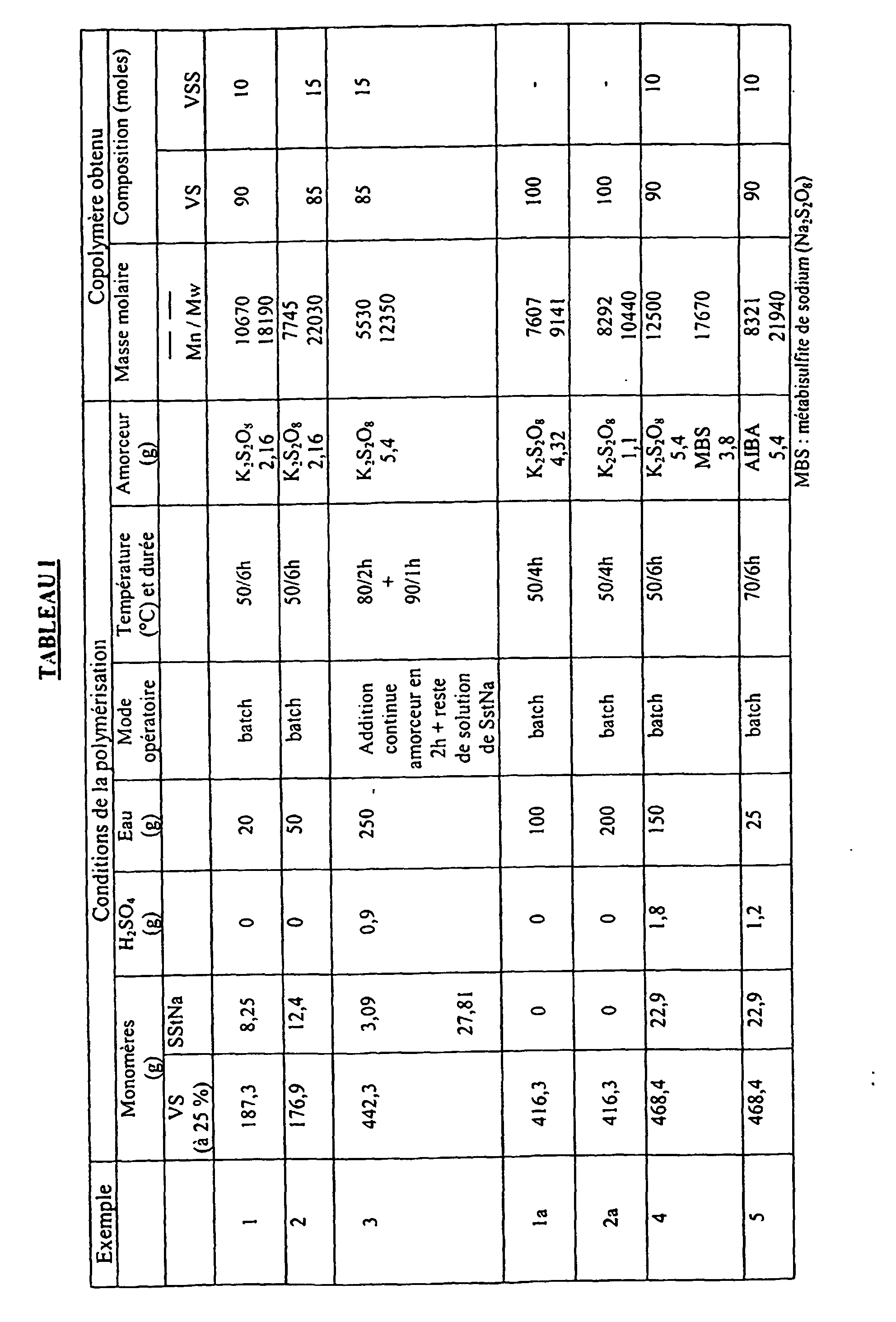

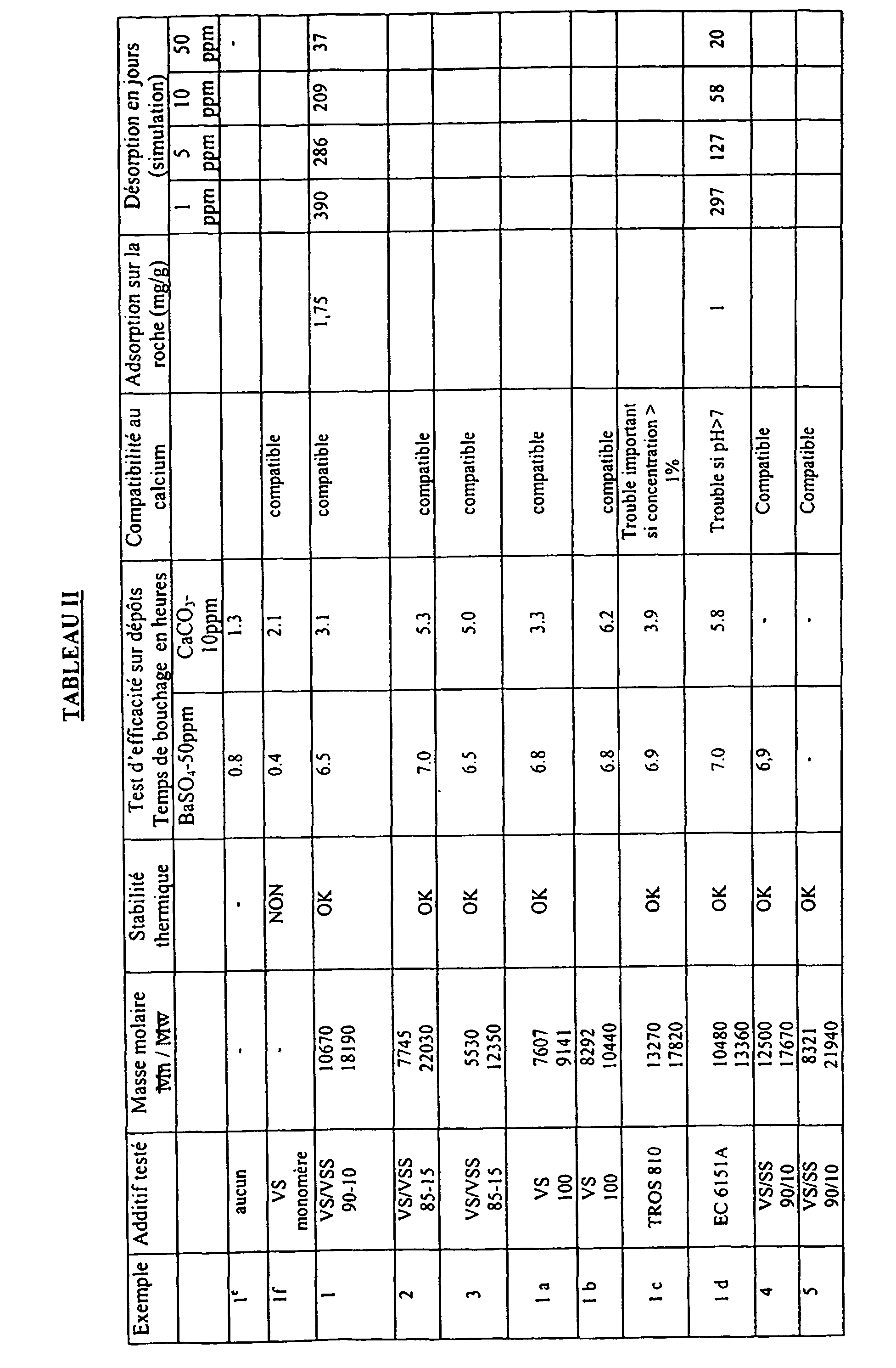

## Revendications

1. Copolymère hydrosoluble consistant en (en moles % des monomères polymérisés):
a) 5 à 95 % d'acide styrènesulfonique ou de l'un de ses sels ;
b) 5 à 95 % d'acide vinylsulfonique ou de l'un de ses sels ;
c) 0 à 20% d'un ou plusieurs monomères insaturés non ionisables choisis parmi le groupe constitué par les (meth)acrylamides non substitués ou (C1-C8) alkyl ou hydroxy (C1 - C8) alkyl substitués; les esters (méth)acryliques non substitués ou (C1 - C8) alkyl- ou hydroxy (C1-C8) alkyl- substitués; l'acétate de vinyle, le styrène, le vinyltoluène ;
d) éventuellement des motifs dérivés d'acides polycarboxyliques insaturés ou l'un de leurs sels représentant jusqu'à 30% en moles de monomères polymérisés.

2. Copolymère selon la revendication 1 dans lequel le ou les monomères insaturés non ionisables c) sont dans la gamme 0-10% en moles.

3. Copolymère selon la revendication 1 ou 2, consistant en (en moles % des monomères polymérisés) :
a) 10 à 45% d'acide styrènesulfonique ou de l'un de ses sels ;
b) 55 à 90% d'acide vinylsulfonique ou de l'un de ses sels.

4. Copolymère selon l'une des revendications 1 à 3, dans lequel tout ou partie des acides sulfoniques sont remplacés par leurs sels de métaux alcalins ou leurs sels d'ammonium ou leurs sels d'amines quaternisés.

5. Copolymère selon l'une quelconque des revendications 1 à 4 **caractérisé en ce que** l'acide styrènesulfonique est l'acide 4-styrènesulfonique.

6. Copolymère selon l'une quelconque des revendications 1 à 5, présentant une masse molaire (en nombre) comprise entre 3 000 et 50 000 et de préférence entre 5 000 et 30 000.

7. Copolymère selon l'une quelconque des revendications 1 à 6, présentant un indice de dispersité Mw/Mn inférieur ou égal à 3.

8. Inhibiteur de dépôts inorganiques comprenant un copolymère selon l'une quelconque des revendications 1 à 7.

9. Procédé de préparation d'un copolymère selon l'une quelconque des revendications 1 à 7, **caractérisé en ce qu'**il consiste à polymériser les monomères en solution aqueuse, hydroalcoolique, ou alcoolique, en présence d'un initiateur de radicaux libres et à une température comprise entre 40 et 120°C.

10. Utilisation de l'inhibiteur de dépôts inorganiques selon la revendication 8 dans les puits pétroliers, de préférence en conditions haute pression/haute température.

11. Utilisation selon la revendication 10 selon la technique squeeze consistant à injecter de l'eau de mer dans le puits, puis à injecter le fluide contenant l'inhibiteur dans le réservoir et à envoyer de nouveau un flux d'eau de mer.

## Patentansprüche

1. Wasserlösliches Copolymer bestehend aus (in Mol% der polymerisierten Monomere):
a) 5 bis 95% Styrolsulfonsäure oder einem ihrer Salze;
b) 5 bis 95% Vinylsulfonsäure oder einem ihrer Salze;
c) 0 bis 20% eines oder mehrerer ungesättigter, nicht ionisierbarer Monomere, die ausgewählt sind aus der Gruppe, die von den unsubstituierten (Meth) acrylamiden oder den (C1 bis C8) Alkyl- oder Hydroxy (C1 bis C8) alkyl-substituierten (Meth) acrylamiden; den unsubstituierten (Meth) acrylsäureestern oder den (C1 bis C8) Alkyl- oder Hydroxy (C1 bis C8) alkyl-substituierten (Meth) acrylsäureestern; Vinylacetat, Styrol, Vinyltoluol gebildet wird;
d) wobei gegebenenfalls von ungesättigten Polycarbonsäuren oder einem ihrer Salze abgeleitete Einheiten bis zu 30 Mol % der polymerisierten Monomere ausmachen.

2. Copolymer nach Anspruch 1, in dem das ungesättigte, nicht ionisierbare Monomer oder die ungesättigten, nicht ionisierbaren Monomere (c) in dem Bereich von 0 bis 10 Mol % ist (sind).

3. Copolymer nach Anspruch 1 oder 2, bestehend aus (in Mol % der polymerisierten Monomere):
a) 10 bis 45% Styrolsulfonsäure oder einem ihrer Salze;
b) 55 bis 90% Vinylsulfonsäure oder einem ihrer Salze.

4. Copolymer nach einem der Ansprüche 1 bis 3, in dem alle oder ein Teil der Sulfonsäuren durch ihre Alkalimetallsalze oder ihre Ammoniumsalze oder ihre quaternären Aminsalze ersetzt sind.

5. Copolymer nach irgendeinem der Ansprüche 1 bis 4, **dadurch gekennzeichnet, dass** die Styrolsulfonsäure 4-Styrolsulfonsäure ist.

6. Copolymer nach irgendeinem der Ansprüche 1 bis 5, aufweisend eine Molmasse (zahlenmäßig) zwischen 3.000 und 50.000, und bevorzugt zwischen 5.000 und 30.000.

7. Copolymer nach irgendeinem der Ansprüche 1 bis 6, aufweisend einen Polydispersitätsindex Mw/Mn kleiner als oder gleich 3.

8. Hemmstoff gegen anorganische Ablagerungen, der ein Copolymer nach irgendeinem der Ansprüche 1 bis 7 enthält.

9. Verfahren zur Herstellung eines Copolymers nach irgendeinem der Ansprüche 1 bis 7, **dadurch gekennzeichnet, dass** es darin besteht, die Monomere in wässriger, wässrig-alkoholischer oder alkoholischer Lösung in Anwesenheit eines Radikalstarters und bei einer Temperatur zwischen 40 und 120° Celsius zu polymerisieren.

10. Verwendung des Hemmstoffs gegen anorganische Ablagerungen nach Anspruch 8 in Erdölbohrlöchern, bevorzugt unter Bedingungen von hohem Druck/hoher Temperatur.

11. Verwendung nach Anspruch 10 nach der Einpresstechnik, die darin besteht, Meerwasser in die Bohrlöcher einzuspritzen, dann das Fluid, das den Hemmstoff enthält, in das Reservoir einzuspritzen, und erneut einen Fluss von Meerwasser einzuleiten.

## Claims

1. Hydrosoluble copolymer consisting of (in mole % of polymerised monomers):
a) 5 to 95% of styrenesulphonic acid or one of its salts;
b) 5 to 95% of vinylsulphonic acid or one of its salts:
c) 0 to 20 % of one or several non-ionisable insaturated monomers from the group constituted by non-substituted (meth)acrylamide or substituted (C₁-C₈)-hydroxyalkyl or (C₁-C₈)-alkyl; non-substituted (meth)acrylic ester or substituted (C₁-C₈)-hydroxyalkyl or (C₁-C₈)-alkyl, vinyl acetate, styrene, vinyltoluene;
d) possibly units deriving from insaturated polycarboxylic acids or one of their salts, representing up to 30 mole % of the polymerised monomers.

2. Copolymers according to claim 1, wherein the one or more non-ionisable insaturated monomers c) are in the range of 0-10 mole %.

3. Copolymers according to claim 1 or 2, consisting of (in mole % of polymerised monomers):
a) 10 to 45% of styrenesulphonic acid or one of its salts;
b) 55 to 90% of vinylsulphonic acid or one of its salts;

4. Copolymers according to claim 1 to 3, wherein all or part of the sulphonic acids are replaced by their alkaline metal salts, their ammonium salts or their quaternised amine salts.

5. Copolymers according to any of claims 1 to 4, **characterised in that** the styrenesulphonic acid is the 4-styrenesulphonic acid.

6. Copolymers according to any of claims 1 to 5, presenting a molecular mass (by number) comprised between 3 000 and 50 000 and preferably between 5 000 and 30 000.

7. Copolymers according to any of claims I to 6, presenting a dispersity index Mw/Mn ≤ 3.

8. Inorganic deposit inhibitor comprising a copolymer according to any one of claims 1 to 7.

9. Process for preparing a copolymer according to any one of claims 1 to 7, consisting in polymerising the monomers in aqueous, hydroalcoholic or alcoholic solutions, in the presence of free radical initiators and at a temperature comprised between 40 and 120°C.

10. Use of the inorganic deposit inhibitor according to claim 8 in oil wells, preferably under high pressure/high temperature conditions.

11. Used according to claim 10, according to the squeeze process, consisting in injecting sea water into the well, then injecting the fluid containing the inhibitor into the well and injecting again a flow of sea water.
